# EUROPEAN PATENT SPECIFICATION

(11) **EP 1 106 548 B1**
(45) Date of publication and mention of the grant of the patent: **31.03.2004**
(21) Application number: 00125352.5
(22) Date of filing: 30.11.2000
(51) Int. Cl.: B65G 65/00, B65G 49/08, B65G 39/12, B65G 13/11

(54) **Multiplatform conveyor for accumulating and transferring flat products, particularly ceramic tiles**
Mehretagen-Förderer zur Förderung und Speicherung von flachen Produkten, insbesondere Keramikfliesen
Convoyeur à plates-formes multiples, pour accumuler et transporter des produits plats, notamment des carreaux en céramique

(30) Priority: 03.12.1999 IT MO990268
(43) Date of publication of application: 13.06.2001
(73) Proprietor: GRUPPO BARBIERI & TAROZZI S.r.l., 41043 Formigine (Modena) (IT)
(72) Inventor: Tarozzi, Fausto, 20145 Milan (IT)
(74) Representative: Burrows, Anthony Gregory

(56) References cited:
- EP-A- 0 445 695
- DE-A- 3 320 737
- FR-A- 2 738 230
- GB-A- 1 206 809
- GB-A- 1 241 091
- GB-A- 1 318 576
- JP-A- 5 238 528
- US-A- 4 582 464

## Description

The present invention relates to a two-sided multiplatform carriage for accumulating and transferring flat products, particularly ceramic tiles.

Multiple-layer containers of products, currently known and termed hereinafter as "boxes", have long been used, especially in ceramic manufacturing companies, and consist of a box-like structure which is shaped like a parallelepiped and is composed of a flat base from which two vertical and parallel sides rise, said sides being joined in an upward region by cross-members or by a roof.

Multiple horizontal rollers are supported between such sides and are arranged so as to form a plurality of mutually stacked supporting platforms; each platform can be motorized from the outside with corresponding transmission means carried by appropriate arms which are in turn mounted on a frame which forms, as a whole, a loading and unloading station; such transmission means alternately engage the ends of the rollers, motorizing the corresponding platform so as to generate a sort of conveyor belt which can move in the loading and unloading direction.

The ends of the rollers are supported on the sides substantially in two manners: in a first one, they simply rest in seats which are provided, in a downward region, with a retention slot, and during motorization said transmission means first raise all the rollers of a same platform and then make them turn simultaneously; in a second manner, the ends are supported on the sides in suitable seats provided with antifriction bushes and with elements which prevent transverse sliding.

The first described solution requires, for lifting the rollers of a platform, a pair of arms which, by suitably moving on the frame, arrange themselves on either side of each box when it is placed in the station and engage and lift said ends of the rollers and make them turn.

On the one hand, this first solution is cheaper than the second one as regards the structure of the rollers that can be used, which can be obtained directly from simple tubes cut to the appropriate length and arranged, as mentioned, so as to rest in the corresponding seats defined in the sides, but it is more expensive as regards the loading and unloading station, since said station requires, as mentioned, at least two actuation arms provided with the motion transmission means.

The reverse occurs for the second known solution, which requires a single actuation arm for the station, while the rollers must be adapted and preset in advance for synergistic coupling with the single-side transmission means; all this leads to considerable preparation, which consists in using a large number of antifriction bushes to be inserted in the insertion seats formed in the sides of the boxes, in applying pairs of fixed collars for the axial retention of the rollers, and in adopting profiles for interlocking coupling between the end of the rollers and the transmission means.

In order to attempt to reduce the cost of the first solution, which is generally preferred since it is simpler in relation to the large number of rollers to be used, boxes have been provided having a hybrid solution which in practice is constituted by boxes which have, on a side used as a simple support, seats provided with fixed bushes into which the corresponding ends of the rollers are inserted, while simple through seats with downward retention slots are provided on the opposite side, which is used to support and lift for coupling to the single-side motion transmission means supported by a single actuation arm; substantially, the plurality of rollers lies obliquely when inactive and arranges itself horizontally when it is motorized, or lies horizontally when inactive and is slightly raised obliquely when it is motorized.

Although this hybrid solution significantly reduces the costs of the boxes and in general of the loading and unloading stations, it entails not only the need to still provide a large number of antifriction bushes at least on one side, but also a required direction of orientation of the boxes under the station that must move the rollers, since the boxes must be presented to the station with a mandatory orientation, i.e. so as to offer to the actuation arm the ends of the rollers to be gripped and raised.

This considerably increases the complexity of the organization of the movement of the boxes within factories and in practice does not provide the economic advantage that it possesses only apparently.

The aim of the present invention is to solve the above problems of the prior art, by providing a two-sided multiplatform carriage for accumulating and transferring flat products, particularly ceramic tiles, which can be synergistically used in loading and unloading stations which have a single actuation arm, thus achieving their constructive economic advantages, and maintains the constructive simplicity and free directionality that is typical of boxes having rollers which are simply rested at both ends. A multiplatform carriage as recited in the preamble of claim 1 is disclosed in DE-A-33 20 737.

This aim and other objects are achieved by a two-sided multiplatform carriage for accumulating and transferring flat products, particularly ceramic tiles, which is composed of a flat base to which two mutually parallel vertically protruding sides are rigidly coupled, said sides being provided with correspondingly aligned rows and columns of through seats for supporting the ends of a plurality of rollers, said seats being provided, at their lowest ends, with slots for retaining said roller ends in the inactive configuration of the rollers, characterized in that said slots are covered with corresponding cradle-shaped antifriction means.

Further characteristics and advantages will become better apparent from the description of a preferred embodiment of a two-sided multiplatform carriage for accumulating and transferring flat products, particularly ceramic tiles, illustrated only by way of non-limitative example in the accompanying drawings, wherein:

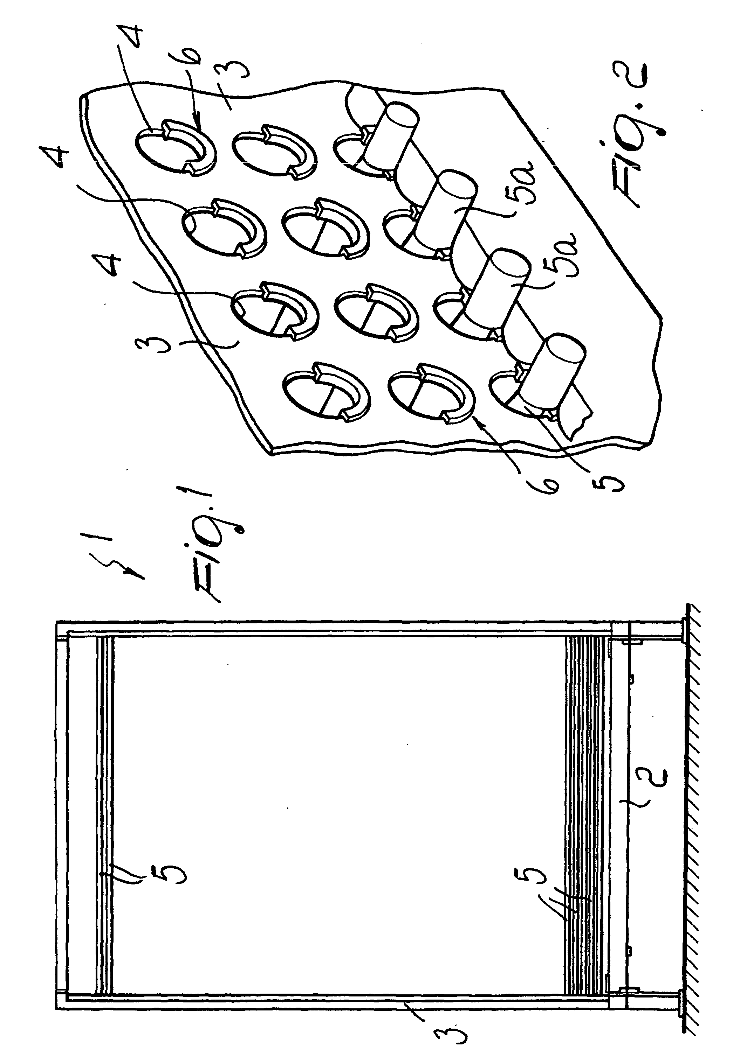

Figure 1 is a schematic view of a two-sided multiplatform carriage for accumulating and transferring flat products, particularly ceramic tiles, according to the invention;
Figure 2 is a detail view of a portion of a side of said carriage;

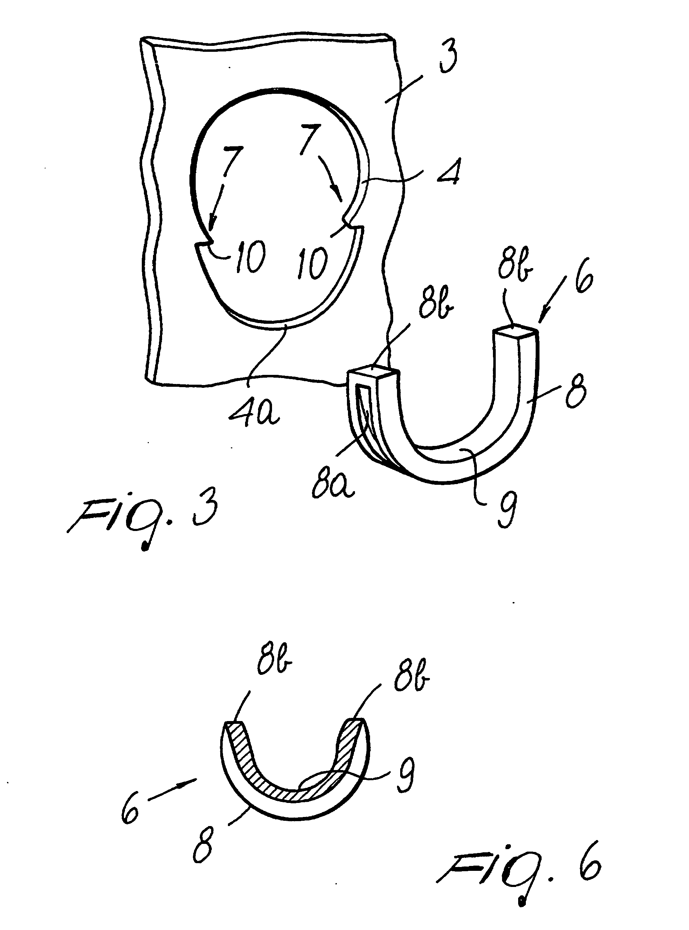

Figure 3 is an exploded view of a through seat and of a corresponding bush half constituting an antifriction means which can be inserted in the slot;

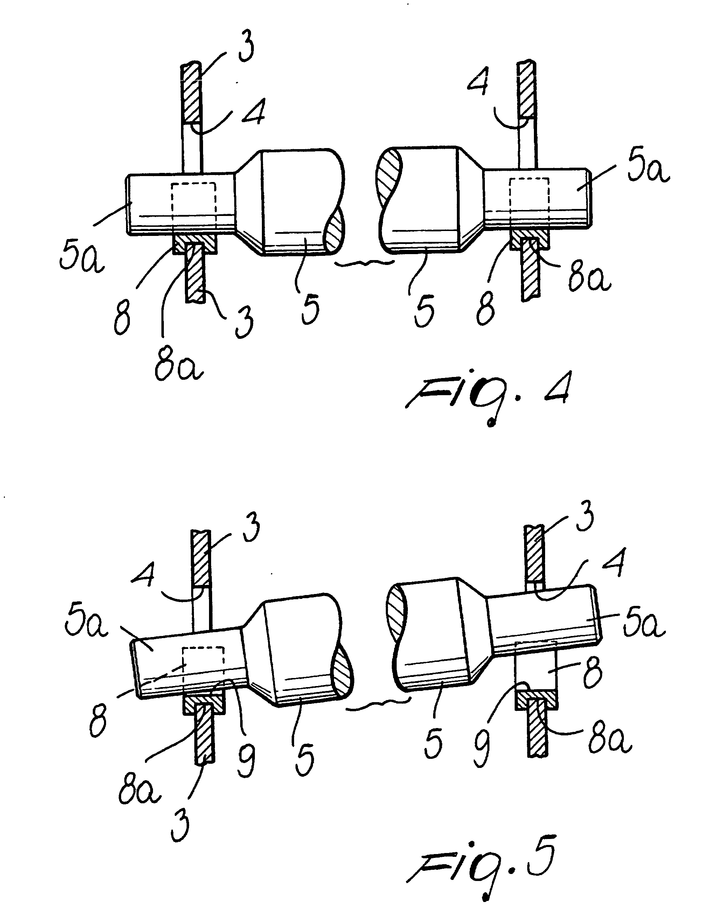

Figures 4 and 5 are both partially sectional views of a roller inserted between the sides of a carriage, in the respective configurations for complete support in the slots of the through seats provided with the antifriction means and for lifting one end;
Figure 6 is a sectional view, taken along a central vertical plane, of the antifriction means.

With reference to the figures, the reference numeral 1 generally designates a two-sided multiplatform carriage for accumulating and transferring flat products, particularly ceramic tiles, which is conventionally composed of a flat base 2 to which two vertical and parallel sides 3 are rigidly coupled, said sides being provided with rows and columns of through seats 4 for supporting the ends 5a of a plurality of rollers 5.

The through seats 4 are provided, at their lowest end, with slots 4a for retaining the ends 5a when the rollers 5 are in the inactive configuration, and are each provided with corresponding antifriction means 6 which as a whole are cradle-shaped.

The slots 4a have a polygonal or semicircular perimeter, and the antifriction means 6 are provided with means 7 for retaining the antifriction means 6.

Said antifriction means are constituted by bush halves 8 which can be seated in the slots 4a; each bush half defines, in an upward region, a preferably semicircular receptacle 9 for supporting a corresponding end 5a of a roller 5 and externally defines a groove 8a which can be engaged on the peripheral profiles of the slots 4a.

The means 7 for retaining the bush halves 8 and preventing their extraction are constituted by pairs of teeth 10 which protrude transversely and opposite each other, defining small abutment shoulders for the upper edges 8b of the bush halves 8.

The operation of the invention can be easily deduced from the above description: a corresponding bush half 8, made of material with low rolling friction, is inserted in each one of the slots 4a of the through seats 4, usually by push-fit insertion of the edges of said slot in the grooves 8a.

The teeth 10 arranged at the connecting region between the upper extension of the through seats 4 and the slots 4a can be skipped over, by elastic snap action, by the edges 8b of said bush halves 8, and once engagement has been completed said teeth define shoulders which prevent accidental extraction of said bush halves.

The carriage 1, whose walls 3 are equipped with said bush halves 8, on which the ends 5a of the rollers 5 rest, can thus be inserted in the maneuvering area of a conventional single-arm machine for motorizing the rollers 5 equally from either side, since when the arm of said machine grips and raises on a single side the ends 5a of a row of rollers 5 that constitutes a supporting surface for the carriage 1 and motorizes it, the corresponding opposite ends of said rollers 5 can rotate with minimal friction even if they are left to rest in the receptacles 9 formed in the bush halves 8.

When said bush halves wear out due to use of the carriage 1, they can be replaced simply by extracting them from the slots 4a, bending their ends slightly in order to skip over the retention teeth 10.

In practice it has been observed that the described invention achieves the intended aim and objects, i.e. it allows to place a carriage 1 before the single actuation arm of a conventional machine for loading and unloading flat products by introducing it in the operating area of said machine without having to first orientate it specifically on a fixed coupling side.

The invention thus conceived is susceptible of numerous modifications and variations, all of which are within the scope of the inventive concept.

All the details may further be replaced with other technically equivalent elements.

In practice, the materials used, as well as the shapes and the dimensions, may be any according to requirements without thereby abandoning the scope of the protection of the appended claims.

## Claims

1. A two-sided multiplatform carriage for accumulating and transferring flat products, particularly ceramic tiles, composed of a flat base (2) to which two mutually parallel vertically protruding sides (3) are rigidly coupled, said sides (3) being provided with correspondingly aligned rows and columns of through seats (4) for supporting the ends (5a) of a plurality of rollers (5), said seats (4) being provided, at their lowest ends, with slots (4a) for retaining said roller ends (5a) in the inactive configuration of the rollers (5), **characterized in that** said slots (4a) are covered with corresponding cradle-shaped antifriction means (6).

2. The carriage according to claim 1, **characterized in that** said slots (4a) define retention means (7) for the fixed retention of said antifriction means (6).

3. The carriage according to the preceding claims, **characterized in that** said antifriction means (6) are constituted by bush halves (8) which can be fitted into said slots (4a), each bush half (8) defining, in an upward region, a receptacle (9) for supporting a corresponding end (5a) of a roller (5).

4. The carriage according to claim 3, **characterized in that** said receptacle (9) has a semicircular profile.

5. The carriage according to the preceding claims, **characterized in that** said bush halves (8) have, on their outside perimeter, a groove (8a) for engagement on the edges that define said slots (4a).

6. The carriage according to claim 2, **characterized in that** said retention means (7) are constituted by pairs of teeth (10) which protrude transversely, face each other and define small abutment shoulders for the upper edges of said bush halves (8).

## Patentansprüche

1. Zweiseitiger Träger mit mehreren Ebenen zum Aufnehmen und Befördern von flachen Gegenständen, insbesondere Keramikfliesen, mit einer flachen Basis (2), an der zwei zueinander parallele, vertikal stehende Seiten (3) fest angeordnet sind, wobei die Seiten (3) mit zueinander entsprechend ausgerichteten Zeilen und Spalten von Lagerlöchern (4) versehen sind, um die Enden (5a) einer Vielzahl von Rollen (5) zu halten, wobei die Lagerlöcher (4) an ihren unteren Enden mit Schlitzen (4a) versehen sind, um die Rollenenden (5a) in dem inaktiven Zustand der Rollen (5) zu halten, **dadurch gekennzeichnet, dass** die Schlitze (4a) mit entsprechend wiegenförmigen reibungsverringernden Mitteln (6) versehen sind.

2. Träger nach Anspruch 1, **dadurch gekennzeichnet, dass** die Schlitze (4a) Arretiermittel (7) für die feste Arretierung der reibungsverringernden Mittel (6) definieren.

3. Träger nach einem der vorhergehenden Ansprüche, **dadurch gekennzeichnet, dass** die reibungsverringernden Mittel (6) aus Lagerbuchsenhälften (8) bestehen, die in die Schlitze (4a) eingesetzt werden können, wobei jede Lagerbuchsenhälfte (8) in einem oberen Bereich eine Aufnahme (9) zum Abstützen eines entsprechenden Endes (5a) einer Rolle (5) definiert.

4. Träger nach Anspruch 3, **dadurch gekennzeichnet, dass** die Aufnahme (9) ein halbkreisförmiges Profil besitzt.

5. Träger nach einem der vorhergehenden Ansprüche, **dadurch gekennzeichnet, dass** die Lagerbuchsenhälften (8) an ihrem Außenumfang eine Nut (8a) zum Befestigen an dem Rand, den die Schlitze (4a) definieren, besitzen.

6. Träger nach Anspruch 2, **dadurch gekennzeichnet, dass** die Arretiermittel (7) aus Paaren von Zähnen (10) bestehen, die transversal vorstehen, auf einander zuweisen und kleine Anschlagschultern für die oberen Ränder der Lagerbuchsenhälften (8) definieren.

## Revendications

1. Chariot à deux faces à plates-formes multiples pour accumuler et transférer des produits plats, en particulier des carreaux de céramique, composé d'une base plate (2) à laquelle deux côtés (3) faisant saillie verticalement, parallèles entre eux, sont accouplés de manière rigide, lesdits côtés (3) étant munis de rangées et de colonnes, alignées de manière correspondante, de logements traversants (4) destinés à supporter les extrémités (5a) d'une pluralité de galets de roulement (5), lesdits logements (4) étant munis, à leurs extrémités inférieures, d'encoches (4a) destinées à retenir lesdites extrémités (5a) des galets de roulement dans la configuration inactive des galets de roulement (5), ***caractérisé en ce que*** lesdites encoches (4a) sont recouvertes avec des moyens antifrottement (6) correspondants conformés en berceaux.

2. Chariot selon la revendication 1, ***caractérisé en ce que*** lesdites encoches (4a) définissent des moyens de maintien (7) pour le maintien fixe desdits moyens antifrottement (6).

3. Chariot selon les revendications précédentes, ***caractérisé en ce que*** lesdits moyens antifrottement (6) sont constitués par des demi-coussinets (8) qui peuvent être emboîtés dans lesdites encoches (4a), chaque demi-coussinet (8) définissant, dans une zone orientée vers le haut, un réceptacle (9) destiné à supporter une extrémité correspondante (5a) d'un galet de roulement (5).

4. Chariot selon la revendication 3, ***caractérisé en ce que*** ledit réceptacle (9) présente un profil semi-circulaire.

5. Chariot selon les revendications précédentes, ***caraetérisé en ce que*** lesdits demi-coussinets (8) ont, sur leur périmètre extérieur, une gorge (8a) pour un engagement sur les bords qui définissent lesdits encoches (4a).

6. Chariot selon la revendication 2, ***caractérisé en ce que*** lesdits moyens de maintien (7) sont constitués par des paires de dents (10) qui saillent transversalement, sont placées en vis-à-vis, et définissent de petits épaulements de butée pour les bords supérieurs desdits demi-coussinets (8).
